# EUROPEAN PATENT APPLICATION

(11) **EP 0 921 340 A2**
(43) Date of publication of application: **09.06.1999**
(21) Application number: 98122698.8
(22) Date of filing: 30.11.1998
(51) Int. Cl.: F16L 19/02

(54) **Valve for fluid conveyance system**

(30) Priority: 05.12.1997 IT MI972712
(71) Applicant: RIV RUBINETTERIE ITALIANE VALVOLE SpA, 28075 Grignasco (Novara) (IT)
(72) Inventor: Velatta, Artemio, 28075 Grignasco (Novara) (IT)
(74) Representative: Lecce, Giovanni

(57) **Abstract**

A valve (1) for fluid conveyance systems comprising a valve body (1') and, in at least an end of the same, a tang (2) and a nut or sleeve at least partly threaded (3), wherein said tang (2) is either fixed or sliding with respect to said valve body (1') and said nut or sleeve (3) slides with respect to said tang (2) when said tang is fixed or sliding, or is fixed with respect to said tang (2) when said tang is sliding.

The nut or sleeve (3) is provided with at least an O-ring gasket (9) and at least an elastic ring (10), inserted respectively in a first throat (7) and a second throat (8) obtained in the internal part of the nut, and tang (5) is provided with a first external step and a second more internal step (5) connected to each other and the tang by means of bevellings or taperings (6). The seal between tang (2) and nut or sleeve (3) is ensured by the strike of said elastic ring (10) and O-ring gasket (9) against the bevellings or taperings (6).

## Description

The present invention relates to a valve for fluid conveyance systems. More particularly, the present invention relates to a valve for fluid conveyance systems suitable to be easily disengaged from the related system should its replacement become necessary.

The valve of the present invention is particularly suitable for use in all those systems wherein a fluid runs and it is necessary to intercept said fluid to block or deviate its flow, and wherein said valve is subjected to be replaced. The valve of the present invention, in fact, may be replaced, for instance, as a consequence of a working failure of the same valve, or a breakdown of the same, in a simple and quick manner, on prior emptying of the liquid which runs in the system.

There are available on the market and are commonly used several types of on-off valves for fluid conveyance systems, for instance ball-valve, fitted-in valves, gate valves, etc. Said conventional valves generally have as a connection type, a female (or male (threading), obtained on both ends of the valve body, which threading engages with like male (or female) threadings obtained at the ends of ducts or pipings which connect with said valves.

Therefore, it is a fixed connection, rigidly tied to the fluid conveyance systems, and wherein the seal is by the threaded connection or possible elastic means or the like inserted in the inside of said connection elements.

If the replacement of said valves becomes necessary, one must cut the pipes in order to extract said valve from the system, which involves long times associated to both the cutting of said pipes and the realisation and installation of a new element of connection and seal of the new valve.

To avoid this operation, it is necessary to provide, on the realisation of the connection, possible pipe unions made in three pieces; this involves an increase in realisation costs and possible leakage points.

Object of this invention is to obviate the aforementioned drawbacks.

More particularly, object of this invention is to realise a valve for fluid conveyance systems such as to be easily and quickly assembled in the system and as easily eliminated and replaced in case of a failure or breakdown of the same.

Another object of this invention is to allow the easy replacement of the valve, if this should be installed in obliged and difficult access positions, wherein one has to work in small spaces.

Another object of the present invention is to provide a valve that can make up, at least to some extent, for the possible distance errors between the pipings wherein it is inserted.

A further object of the present invention is to provide a valve that can reduce possible leakage points, utilising simple and reliable seal elements, and that has a high degree of resistance and reliability in the time, and that is such as to be easily and economically realised.

According to the present invention, these and other objects resulting from the following description are achieved by a valve for fluid conveyance systems, comprising:
- a valve-body;
- a connection system placed at least at one end of said valve-body, said connection system comprising a tang and a nut or sleeve at least partly threaded engaged on said tang,
- an O-ring, and
- a piping connected to said tang by means of said nut or sleeve (3).

Besides, the slide-chamber is provided with at least a throat wherein an elastic ring is inserted, wherein the internal surface of the nut or sleeve is provided with at least a throat that contains an elastic ring, and the tang has an external diameter that increases stepwise towards the end facing the piping and comprises at least a step connected by a bevelling or tapering, said elastic ring striling against said bevelling or tapering.

The tang may be fixed or freely sliding with respect to the tang when said tang is fixed or sliding, or said nut may be fixed with respect to said tang when the latter is a sliding tang.

When the tang is a sliding tang, it slides in a chember which the valve body os provided with. The portion of tang that slides in said chamber has a diemater that increases stepwise in the direction of the valve body and is provided with at least a throat wherein an O-ring gasket is inserted that has an external diameter greater than the internal diameter of said chamber. Besides, the slide-chamber is provided with at least a throat, wherein an elastic ring is inserted.

Further characteristics and advantages of the valve for fluid conveyance systems of the present invention shall be evident thanks to the following detailed description, wherein reference is made to the figures of the attached drawings which represent some preferred embodiments, solely given by way of non limiting examples, of said valve, and wherein:
Figure 1 is a schematic view of a longitudinal section of the valve of the present invention and the related connection system, comprising the tang and the nut, wherein said nut is represented at the top in a free position and at the bottom in a piping-tightening position, stressing in this way the shifting of the nut;
Figures 2-4 show schematic longitudinal views, partly in section, of a different embodiment of the valve of the present invention and the related connection system, wherein the tang is movable and may slide in the valve body;
Figure 5 represents the schematic longitudinal view, partly in section, of the valve of the present invention, wherein on both ends of the valve there are stressed the two types of fixed tang connection (as shown in Fig. 1) and mobile type connection (as shown in Figs 2-4), both in a free position;
Figure 6 is the schematic longitudinal view, partly in section, of the valve of the present invention, wherein on the two ends of the valve there are stressed the two types of fixed tang connection (as shown in Fig. 1) and mobile type connection (as shown in Figs. 2-4), both in a tightening position on the pipings; and
Figures 7-8 show the schematic longitudinal view, partly in section, of a further embodiment of the valve of the present invention and the related connection system, wherein the tang is movable and may slide in the valve body, while the nut is rigidly connected at the external free end of the tang.

With special reference to the figures, wherein the same references are utilised for the common parts or components, the valve for fluid conveyance systems of the present invention, indicated by 1 as a whole, comprises a valve body 1' and, in at least one of its ends, a tang 2 coupled to said valve body 1' and a nut 3 engaged externally on said tang 2. Said tang 2 may be fixed or mobile with respect to the valve body 1', and said threaded nut 3 may be fixed on tang 2 when said tang is mobile or may freely slide and rotate on tang 2 when said tang is fixed or mobile.

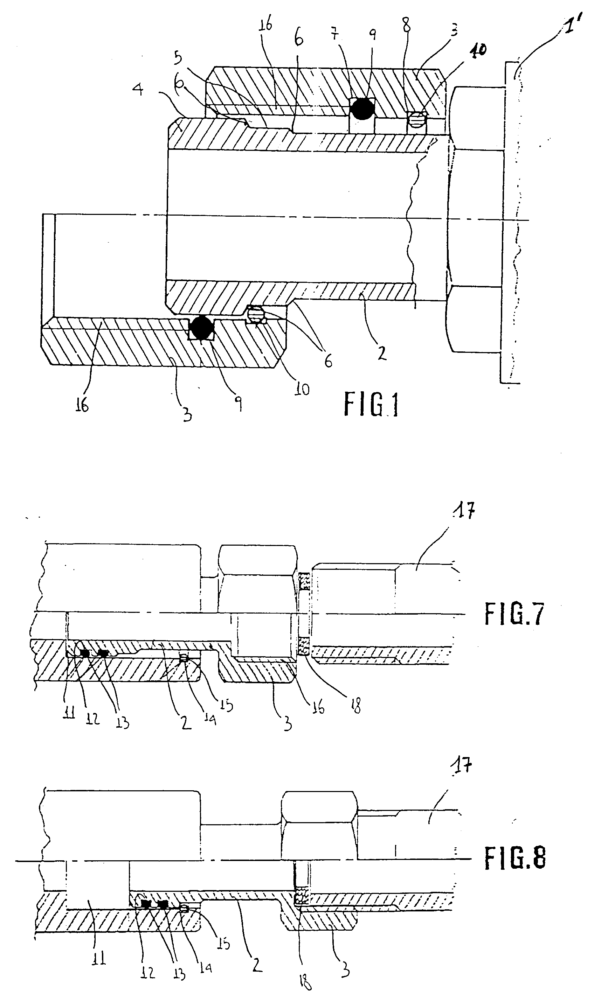

Figure 1 shows a valve for fluid conveyance systems of the present invention, wherein the connection system is by a fixed tang 2 and nut 3 mobile and free to slide and rotate on said fixed tang 2.

On each of the two ends of the valve body 1', there is rigidly fixed tang 2 having a circular section and an external diameter growing stepwise towards the free external end opposite to the threaded one fixed at an end of the valve body 1'. More particularly, said tang 2 is provided with a first external step, wherefrom a longitudinal portion 4 develops, and a second more internal step 5, said steps being connected to each other and tang 2 by means of bevellings or taperings 6.

Nut 3 comprises an end facing the valve body 1', with the opposite end facing the external free end of tang 2. The internal surface of said nut 3 is provided with a partial threading 16 in the portion facing the free end of tang 2 and is smooth, i.e., non-threaded, in the portion facing the valve body 1'. Said non threaded portion of the internal surface is provided with at least a first throat 7, having a section, by way of example and preferably, rectangular, suitable to house an O-ring gasket 9, having preferably a circular section, and at least a second throat 8, having a section, by way of example and preferably, rectangular, suitable to house an elastic ring 10 also of a preferably circular section. Said O-ring gasket 9 may be from elastic material of the type of nitrilic rubber NBR for running temperatures of up to 110°C and of the type of fluorinated rubber for temperatures of up to 140°C. Said elastic ring 10 is preferably made from deformable metals, of the type, for instance of phosphorous bronze; such material, as is known, allows to combine mechanical resistance and smoothness. The seal of the connection system is ensured by the O-ring gasket 9 and the elastic ring 10, both of them having internal diameters smaller than the external diameter of the first step 4 and the second step 5 of tang 2 by means of which the steps of said gasket and said elastic material couple in the tightening position to pipings 17, with a possible interposition of a conventional seal ring 18.

In said tightening position, possible unthreadings of nut 3 are prevented by the elastic ring 10, which is pushed and enlarged towards the inside of the second throat 8, wherein the same is inserted.

The partly threaded nut 3 has an axial length smaller than that of the respective tang 2, so that when said nut 3 is in a complementary re-entered position on tang 2, the overall dimensions of valve 1 is only determined by the end of both tangs 2. Besides, the interaxial distance, along the surface of the threaded nut 3, between said first throat 7 and said second throat 8 is smaller than the axial length of the longitudinal portion of said first external step of tang 2. In this way the seal of the connection system is ensured by the O-ring gasket 9, which remains slightly compressed on the longitudinal portion 4 of the first external step of tang 2 and the elastic ring 10, which realises an end-of-stroke of nut 3, striking the bevelling or tapering 6 through which the first step 4 is connected to the second step 5.

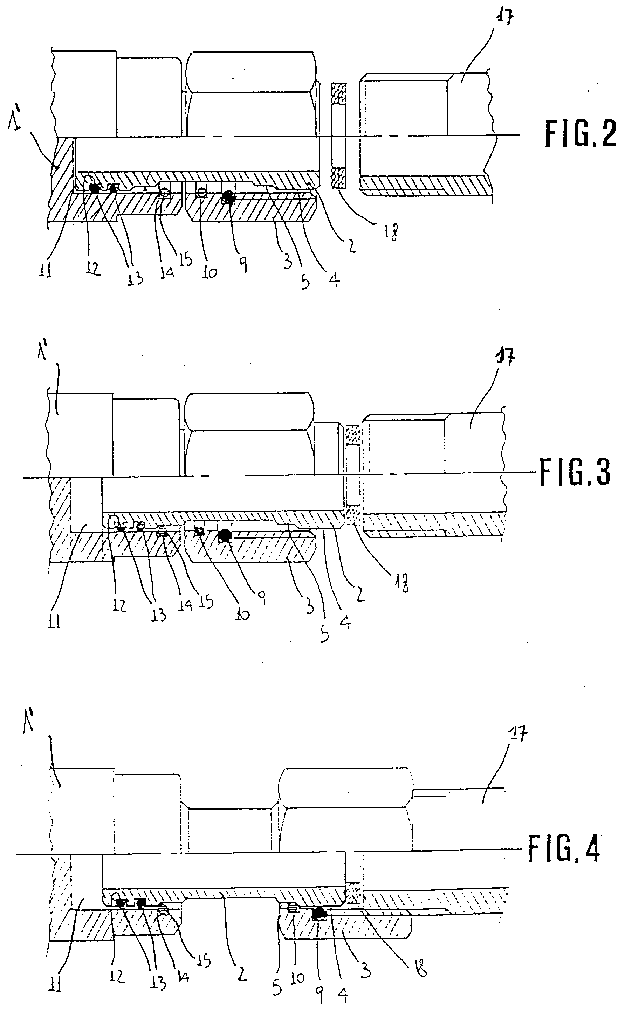

Figure 2-4 show a variant embodiment of the valve for fluid conveyance systems of the present invention, wherein the connection system has a mobile tang 2 and a nut 3, mobile and free to slide and rotate in said mobile tang 2. The coupling of nut 3 and mobile tang 2 is identical to that shown in Figure 1 and previously described. The end of each of the two tangs 2, oriented towards the valve body 1', is free to axially slide within a slide-chamber 11 integrally obtained with the same valve body 1'. Said end of tang 2 has a diameter that increases stepwise in the direction of the valve body 1', which is structurally equal to that of its other end.

The portion of said tang which slides within the slide-chamber 11 is provided with at least a throat 12, preferably two throats, wherein an O-ring gasket 13 is included, having for instance a circular section of the previously described type. Said O-ring gasket 13 has an external diameter greater than the internal slide-chamber 11; in this way, there is ensured the sealing towards the outside by means of the coupling of tang 2 with the slide-chamber 1. Besides, said slide-chamber 11 is also provided with at least a throat 14 wherein an elastic ring 15 is inserted of the type previously described and indicated by 10.

Figures 7 and 8 show a further variant embodiment of the valve for fluid conveyance systems of the present invention, wherein the connection system has a fixed nut 3 and a mobile tang. Nut 3 is rigidly connected or is obtained integrally with the end of tang 2, the latter being freely sliding in the inside of a slide-chamber 11 obtained integrally with the valve body 1'.

The free end of tang 2 has a diameter that increases stepwise in the direction towards the valve body 1' and, in the portion that slides within said slide-chamber 11, said end is provided with at least a throat 12, wherein an O-ring gasket 13 is inserted that has an external diameter greater than the slide-chamber 11, wherein an elastic ring 15 is also inserted.

The types of above described connection systems mat anyhow be provided on valves having a threaded end (male or female) or other connection types; the other end may be provided with one of the three types of connection described till now, according to the type of product and the various installation requirements.

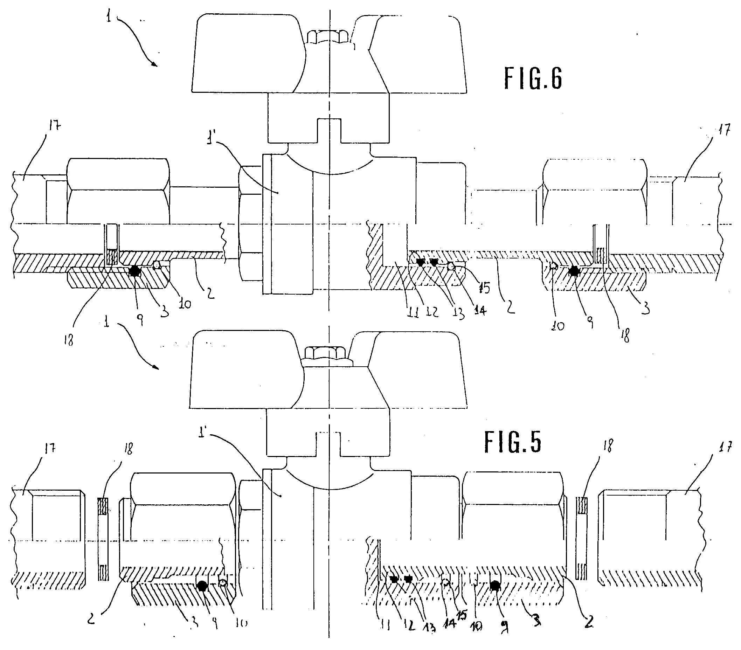

Figures 6 and 7 show a possible combination of the connection systems at the two ends of the valve body 1'; in particular a connection type with fixed tang and mobile nut is used at an end of the valve body 1', and a connection system with a mobile tang and a mobile nut is used at the other end of valve body 1'. The working of valve 1 of the present invention in the embodiment shown in Figure 1 is as follows: when nut 3 is screwed on piping 17 of a fluid conveyance system the O-ring gasket 9 remains slightly compressed on the greater diameter of the first step 4 of tang 2 and prevents possible fluid leakages towards the outside and, at the same time, the elastic ring 10 slides in correspondence of the second more internal step 5 of tang 2. The longitudinal movement of the threaded nut 3 towards the outside is limited in correspondence of the diameter variation of tang 2; this end-of-stroke is performed by the elastic ring 10 inserted in the second throat 8 of nut 3 which strikes the bevelling or tapering 6 that connects the first step 4 with the second step 5. With regard to this, said bevelling or tapering 6 is so realised that when nut 3 is screwed on piping 17, and therefore drawn towards it, the elastic ring 10 is increasingly stressed, strained and enlarged towards the inside of the second throat 8 wherein the same is inserted, preventing the unthreading of nut 3. The movement of nut 3 towards the inside is limited by the contact which the same exercise against the valve body 1'. When nut 3 is in this re-entered position, it does not protrude from tang 2 and the overall dimensions of valve 1 are determined by the end of the two tangs 2. This characteristic is very important as it allows to unscrew nuts 3 and to extract valve 1 from pipings 17 without having recourse to extraordinary operation.

A variant of the valve of the present invention is given by the fact that the tang connection system may also be mobile. As shown in Figures 2-4, tang 2 slides within a chamber 11 integrally obtained with the valve body 1' and in this case the mobile walls become both nut 3 that slides on tang 2 and tang 2 that slides in its turn inside the valve body 1'. This telescopic tang variant may be utilised whenever valve 1 must be installed in obliged and difficult-access positions, when one has to work in narrow spaces. This solution allows in fact to handle more easily valve 1 both during the installation and the removal. The movement of tang 2 lends valve 1 the characteristic of having variable overall dimensions, and allows therefore to make up, to some extent, for the distance errors between pipings 17.

Figures 2-4 show respectively the connection system with a mobile tang 2 and a free nut 3, with tang 2 in extension and nut 3 free, and with tang 2 and nut 3 in tightening position on piping 17.

A further variant of the valve of the present invention, shown in Figures 7 and 8, provides a connection system with a mobile tang 2 and nut 3 rigidly connected or integral with the free end of tang 2. In this case, the tightening of nut 3 on piping 17 causes also tang 2 to rotate in the inside of the slide-chamber 11. Figures 7 and 8 shows, sequentially, the connection system with tang 2 mobile and the related nut 3 respectively in a free position and in a tightening position on pipings 17.

Even though the present invention has been described with reference to some preferred embodiment, various changes and variants may be introduced in the valve for fluid conveyance systems of the present invention, in the light of the above teachings. For instance, in the slide-chamber 11 it is possible to realise at least a further throat wherein an O-ring gasket is inserted that ensure the seal. Besides, nut 3 may be provided with an internal continuous threading, without the first throat 7 with the related sealing O-ring gasket 9 being obtained in its inside.

Therefore, the present invention intends to cover all the alternatives and variants which fall within the protection scope of the following claims.

## Claims

1. A valve (1) for fluid conveyance systems comprising:
- a valve-body (1');
- a connection system placed at least at one end of said valve-body (1'), said connection system comprising a tang (2) and a nut or sleeve at least partly threaded (3) engaged on said tang, engaged on said tang (2),
- an O-ring, and
- a piping (17) connected to said tang (2) by means of said nut or sleeve (3), said nut or sleeve (3) having an end facing the valve body (1') and the opposite end facing the end of tang (2) facing piping (17),
said valve being characterised in that the internal surface of the nut or sleeve (3) is provided with at least a throat (7, 8) containing an elastic ring (10) and in that tang (2) has an external diameter increasing stepwise towards the end facing piping (17) and comprise at least a step (4, 5) connected with a bevelling or tapering (16), said elastic ring striking against said bevelling or tapering (6).

2. The valve according to claim 1, wherein tang (2) is fixed to the valve body (1') and nut (3) slides with respect to said tang (2).

3. The valve according to claim 1, wherein tang (2) slides with respect to the valve body (1') and nut (3) is fixed on tang (2).

4. The valve according to claim 1, wherein tang (2) slides with respect to the valve body (1') and nut (3) slides with respect to tang (2).

5. The valve according to any of the preceding claims, wherein tang (2) comprises a first external step (4) and a second more internal step (5) connected to each other and to said tang (2) by means of bevellings or taperings (6).

6. The valve according to any of the preceding claims, characterised in that said nut (3) comprises a non-threaded portion facing the valve body (1') on which there is obtained at least a first throat (7) suitable to house an O-ring gasket (9), and at least a second throat (8), suitable to house an elastic ring (10), said ring (10) and said gasket (9) having internal diameters smaller respectively that the external diameters of the longitudinal portion of the first step (4) and the second step (5) of tang (2).

7. The valve according to claim 6, characterised in that the interaxial distance between the first throat (7) and the second throat (8) of tang (2) is smaller than the axial length of the longitudinal portion of the first external step (4) of tang (2).

8. The valve according to any of the preceding claims, characterised in that nut (3) has an axial length smaller than or equal to that of the respective tang (2) on which it is engaged.

9. The valve according to the preceding claims 3 and 4, characterised in that the valve body (1') is provided with a slide-chamber (11) and tang (12) axially slides within said slide-chamber (11).

10. The valve according to claim 9, characterised in that said tang (2) has an external diameter that increase stepwise in the direction and in correspondence of the side facing the valve body (1') and the portion of tang (2) that slides within the slide-chamber (11) it is provided with at least a throat (12) wherein there is inserted an O-ring gasket (13) having an external diameter greater than the internal diameter of said slide-chamber (11).

11. The valve according to the preceding claims 9 or 10, characterised in that said slide-chamber (11) is provided with at least a throat (14) wherein an elastic ring (15) is inserted.

12. The valve according to any of the preceding claims 9-11, characterised in that nut (3) is slidingly fixed to the end of tang (2) or is obtained integrally with said sliding tang (2).

13. The valve according to any of the preceding claims, characterised in that the O-ring gaskets (9, 13) are from nitrilic rubber NBR or fluorinated rubber, and the elastic rings (10, 15) are from phosphorous bronze.
